# EUROPEAN PATENT APPLICATION

(11) **EP 1 906 074 A1**
(43) Date of publication of application: **02.04.2008**
(21) Application number: 07117141.7
(22) Date of filing: 25.09.2007
(51) Int. Cl.: F16L 41/06

(54) **Connecting device for drawing fluid from a pressurized pipe**

(30) Priority: 26.09.2006 IT TO20060686
(71) Applicant: SICOMAT DI DENEGRI CARLO & C. S.A.S., 12084 Mondovi' (IT)
(72) Inventor: Denegri, Carlo, 12084 MONDOVI' (IT)
(74) Representative: Jorio, Paolo

(57) **Abstract**

Fluid is drawn from a pressurized pipe (2) by means of a connecting device (1) having a first passage (10) crosswise to an axis (2a) of the pipe (2) and communicating with an opening (19) formed through the pipe (2); and at least one second passage (11) for feeding the fluid to a user device; the first (10) and second (11) passage being connected to each other by a further passage (28).

## Description

The present invention relates to a connecting device for drawing fluid from a pressurized pipe.

In the piping of fluids, particularly gaseous fluids, it is sometimes necessary to draw off fluid at any point along the pipe without exhausting, i.e. affecting the normal operating pressure of, the pipe.

In the piping of pressurized gaseous fluids, such as compressed air, it is also necessary to draw off "dry" fluid, i.e. containing none of the condensation that normally accumulates at the bottom of the pipe. For this reason, the tap holes must necessarily be formed in the top of the pipe, i.e. the part above a horizontal plane through the diameter of the pipe, or through an underlying chord close to the diameter. Though successful in drawing off substantially "dry" fluid, this solution, in the case of user devices located beneath the pipe, calls for the use of contoured pipe lengths or fittings known as "crooks" on account of their characteristic curved shape. Using "crooks" and holes in the top half of the pipe imposes restrictions on the location of the pipe, which must necessarily be located a minimum distance from both the ceiling and the user device, thus occupying space that could otherwise be used for other equipment.

It is an object of the present invention to provide a connecting device designed to provide a straightforward, low-cost solution to the above drawbacks, and which at the same time is cheap and easy to produce, highly efficient and reliable, and easy to use.

According to the present invention, there is provided a connecting device for drawing fluid from a pressurized pipe; the connecting device comprising a first passage crosswise to the axis of the pipe and communicating with an opening formed through the pipe; and at least one second fluid outflow passage separate from said first passage and connectable to a feed line for feeding the drawn-off fluid from the pipe to a user device; and being characterized by also comprising circuit means for connecting said first and second passage to each other in fluidtight manner.

A non-limiting embodiment of the invention will be described by way of example with reference to the accompanying drawings, in which:
Figure 1 shows a view in perspective of a preferred embodiment of the connecting device according to the teachings of the present invention;
Figure 2 shows a cross section of the Figure 1 device;
Figure 3 shows the same view as in Figure 2, of a variation of a detail in Figure 2.

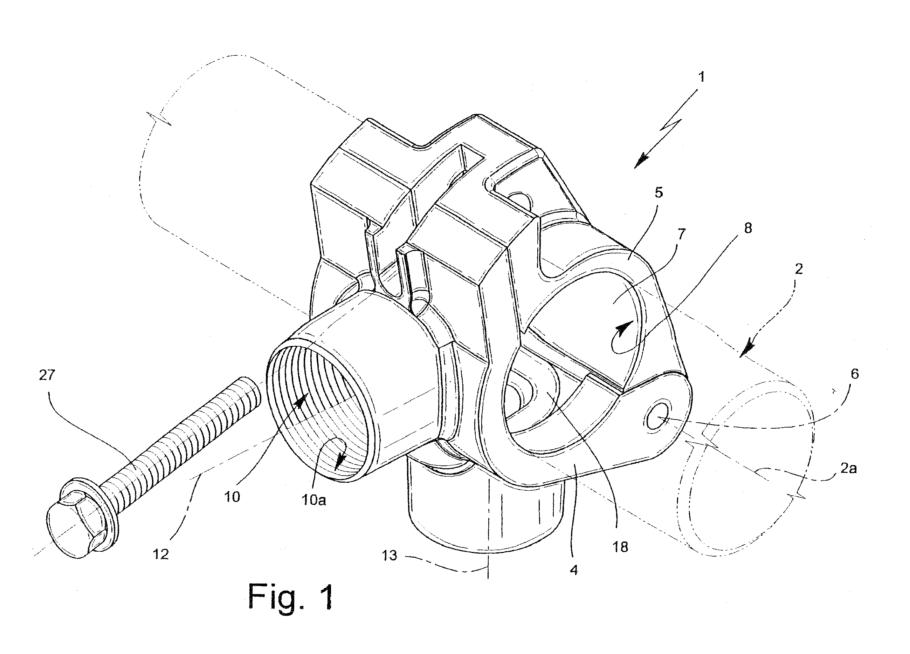

Number 1 in Figure 1 indicates as a whole a connecting device for drawing fluid from a pressurized-fluid pipe 2. More specifically, device 1 described may be used to advantage for drawing off and feeding dry compressed air to a user device (not shown) in the vicinity of pipe 2, without having to exhaust pipe 2.

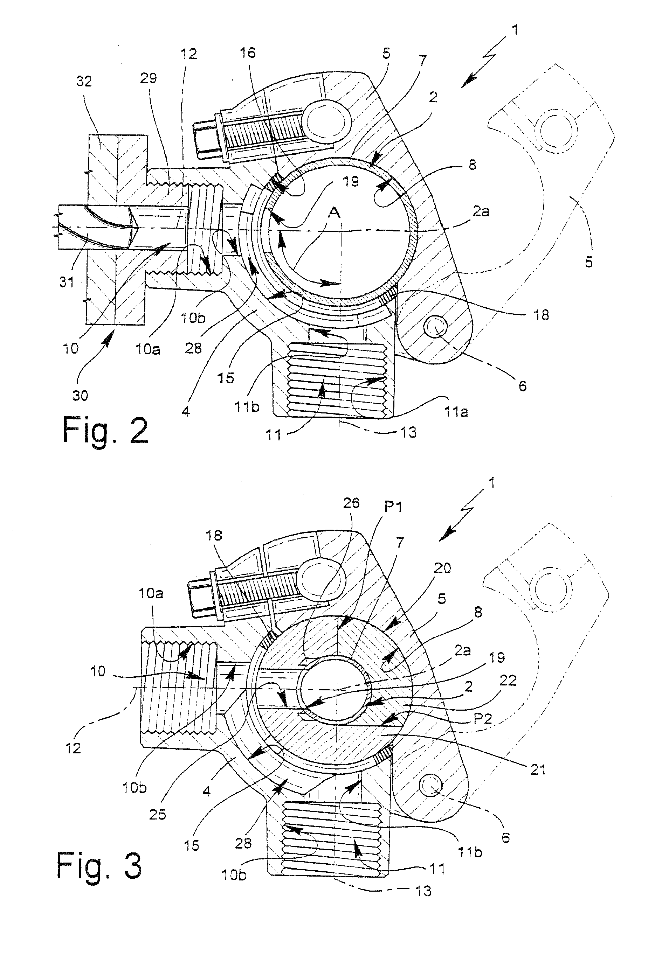

Device 1 comprises a coupling portion 4 and a tightening portion 5 hinged to each other to rotate, with respect to each other and about an axis 6, between a release position (Figure 2) permitting insertion of an intermediate portion 7 of pipe 2, and a closed or work position (Figure 1), in which portions 4 and 5 surround portion 7 of pipe 2 and define a cylindrical passage 8 coaxial with the axis 2a of pipe 2 and fitted through with pipe 2.

Coupling portion 4 has two passages 10 and 11, which extend along respective straight axes 12 and 13 perpendicular to axis 2a of pipe 2 and at a substantially 90° angle A to each other. In a variation not shown, angle A between the two axes is other, in particular, less, than 90°.

In the example described, both passages 10, 11 terminate with respective internally threaded portions 10a, 11a, and each comprise a smooth intermediate portion 10b, 11b, which is smaller in diameter than the corresponding threaded portion 10a, 11a, and communicates at one end with the corresponding threaded portion 10a, 11a, and, at the other end, with a circumferential inner groove 15 formed in the inner surface of portion 4 to connect passages 10 and 11 permanently to each other.

As shown in Figure 2, a seat 16 is also formed in the surface of portion 4 for an annular seal 18, which surrounds passages 10, 11 and groove 15, and, when portions 4 and 5 are in the closed position, is deformed elastically between portion 4 and portion 7 of pipe 2. Seal 18 also surrounds an opening 19 formed through portion 7 of pipe 2 and coaxial with axis 12 of passage 10.

In the Figure 3 variation, device 1 also comprises an adapter assembly 20 selectable from a number of adapter assemblies, depending on the outside diameter of portion 7 of pipe 2, and which comprises two cylindrical bodies 21 and 22 fitted to each other along two perpendicular planes P1 and P2, the first of which extends through axis 2a of pipe 2, and the second of which is tangent to the outer surface of pipe 2. Body 22 performs a forcing function, by resting against portion 5; and body 21 has a through opening 25 extending coaxially with axis 12 of passage 10 at opening 19. On the side facing pipe 2, body 21 also has an annular seat surrounding an end portion of passage 25 and partly housing an annular seal 26 which, in use, is forced against the portion of the pipe defining opening 19.

Device 1 is fitted to pipe 2 as follows. Starting with portions 4 and 5 in the release position, device 1 is fitted to portion 7 of pipe 2 and rotated so that axis 12 of passage 10 is substantially horizontal. At this point, an appropriate adapter assembly 20 is selected and assembled, if necessary; after which, portions 4 and 5 are closed and tightened to each other and the pipe by means of a screw 27 (Figure 1). When tightening portions 4 and 5, seal 18 is deformed between coupling portion 4 and pipe 2 to define, with portion 4 and pipe 2, a conduit 28 connecting passages 10 and 11. Likewise, when provided, seal 26 is forced between pipe 2 and body 21 of adapter assembly 20, and body 21 is forced against seal 18.

At this point, passage 11 is connected in known manner to the user device; an attachment 29 of a drilling tool 30 (shown schematically in Figure 2) is screwed into the threaded portion of passage 10; and a drill bit 31 is inserted inside passage 10 and into portion 10b, which acts as a guide, to form opening 19 in pipe 2. Once pipe 2 is drilled, drill bit 31 is withdrawn, and, at the same time, a valve 32 of tool 30 is closed to prevent outflow of the fluid from pipe 2. The fluid issuing from opening 19 thus flows along conduit 28 to passage 11, and along this to the user device.

Device 1 as described therefore provides for drawing off dry fluid from any point along pipe 2, with no need for exhausting pipe 2, i.e. no change in its original pressure; and for locating pipe 2 adjacent to a ceiling or user device, with no need for crook fittings.

This is mainly due to device 1 enabling lateral drilling of the pipe, and drawing off fluid from underneath the pipe, with no need to disassemble parts of the device and, above all, to rotate or reposition device 1 with respect to the pipe once this is drilled.

The particular design of device 1 also enables simultaneous, independent supply of two user devices. That is, fluid may obviously also be drawn off through passage 10, downstream from valve 32, which, in this case may function as an on-off valve.

As will be clear from the above description, device 1 is straightforward in design, is easy to fit onto the pipe, and can be adapted to various pipe diameters.

Clearly, changes may be made to device 1 as described herein without, however, departing from the protective scope defined in the accompanying Claims. In particular, the conduit connecting the passages and the angle between the axes of the passages may differ from those shown.

## Claims

1. A connecting device for drawing fluid from a pressurized pipe; the connecting device comprising a first passage crosswise to the axis of the pipe and communicating with an opening formed through the pipe; and at least one second fluid outflow passage separate from said first passage and connectable to a feed line for feeding the drawn-off fluid from the pipe to a user device; and being **characterized by** also comprising circuit means for connecting said first and second passage to each other in fluidtight manner.

2. A device as claimed in Claim 1, **characterized in that** said circuit means extends inside the connecting device.

3. A device as claimed in Claim 1 or 2, **characterized in that** said circuit means comprise a conduit connecting said passages.

4. A device as claimed in Claim 3, **characterized by** comprising a coupling portion at least partly surrounding said pipe; said first and said second passage and said conduit being carried by said coupling portion.

5. A device as claimed in Claim 4, **characterized in that** said coupling portion comprises an inner groove, which comes out inside said first and said second passage and at least partly defines said conduit.

6. A device as claimed in Claim 5, **characterized by** also comprising a seal surrounding said first and said second passage and said conduit.

7. A device as claimed in Claim 6, **characterized in that** said seal is forced between said coupling portion and a portion of said pipe; the seal and said portion of the pipe partly defining said conduit.

8. A device as claimed in Claim 6, **characterized by** also comprising an adapter selectable from a number of adapters to fit said device to pipes of different sizes; said adapter being forced against said seal.

9. A device as claimed in Claim 8, **characterized in that** said adapter comprises a concave body having a through opening at said first passage; fluidtight means surrounding the opening in said adapter and resting on said pipe.

10. A device as claimed in any one of the foregoing Claims, **characterized by** also comprising a tightening portion for holding said coupling portion in contact with said pipe; said tightening portion being hinged to said coupling portion and surrounding said pipe.

11. A device as claimed in any one of the foregoing Claims, **characterized in that** said first passage is designed to define a guide for a drill bit of a drilling tool for drilling said pipe.

12. A device as claimed in any one of the foregoing Claims, **characterized in that** said first passage comprises a threaded portion by which to connect a fitting for a further feed line for the fluid drawn from the pipe.

13. A device as claimed in any one of the foregoing Claims, **characterized in that** said second passage is angularly spaced by an angle of substantially 90° with respect to said first passage.
